# EUROPEAN PATENT APPLICATION

(11) **EP 4 006 809 A1**
(43) Date of publication of application: **01.06.2022**
(21) Application number: 21779493.2
(22) Date of filing: 11.03.2021
(51) Int. Cl.: G06Q 30/02, G09F 19/00

(54) **PLATFORM, SYSTEM, METHOD, AND NON-TRANSITORY COMPUTER-READABLE MEDIUM**

(30) Priority: 31.03.2020 JP 2020062796
(71) Applicant: NEC Corporation, 108-8001 Tokyo (JP)
(72) Inventor: TAMURA Tomu, Tokyo 108-8001 (JP)
(74) Representative: MacDougall, Alan John Shaw
(86) International application number: PCT/JP2021/009882
(87) International publication number: WO 2021/200018

(57) **Abstract**

To provide a platform, a system, a method, and a program each adapted to predict an information distribution medium which attracts interest of a plurality of users. A platform (11) according to the present disclosure includes: a gathering unit (111) configured to gathering user information items that are used to predict an information distribution medium (12s) which attracts interest of a user out of a plurality of the information distribution media (12a); and a prediction unit (112) for predicting the information distribution medium (12s) which attracts interest of a plurality of the users at a prescribed time, which is a predetermined point in time ahead of the current time by a predetermined time length, out of the plurality of the information distribution media (12a) based on the user information items of the plurality of the users and information about the plurality of the information distribution media (12a) from the past up to the current time.

## Description

### Technical Field

The present disclosure relates to a platform, a system, a method, and a program, and in particular, to a platform a system, a method, and a program each adapted to predict the information distribution medium which attracts interest of a plurality of users.

### Background Art

In recent years, particularly in urban areas, the amount of information sent out to users via information distribution devices is continuing to increase, and this has been the main cause of the environment of information overload. In such environment of information overload, the information which attract users' interest and causes the users to gaze thereat is changing constantly, and it is thus difficult to get an accurate idea of what the users want. One technique for getting an accurate idea of what the users want is based on the history information of a users' action.

Patent Literature 1 discloses that "the cyber action management server is configured to collect cyber action history information about persons' past actions in respective websites on the internet, and the real action management server is configured to collect information about persons' past actions in a physical store, the integrated action management server is configured to integrate the cyber action history information and the real action history information to generate integrated action history information for each person, and analyze the integrated action history information to generate purchase prediction information about a product which a target customer is predicted to purchase, and a sales promotion information delivery server is configured to deliver, based on the purchase prediction information, sales promotion information (coupons and instructions for customer service provision) for the target customer to a terminal for the target customer and a terminal for a staff member of the physical store". Patent Literature 1 does not disclose that "the information distribution medium which attracts interest of a plurality of users is predicted".

Patent Literature 2 discloses that "the system enables the display of hyper-relevant ad content with synchronized remote audio, personal messaging and public service alerts on surrounding objects and provides for the real-time logging and later downloading of data to confirm communications and content deliveries between objects, track and measure consumer engagement, verify consumer's direct responses to ad viewings with an accountability system". Patent Literature 2 does not disclose that "the information distribution medium which attracts interest of a plurality of users is predicted".

### Citation List

### Patent Literature

Patent Literature 1: International Patent Application Publication No. WO2020/008938
Patent Literature 2: Japanese Unexamined Patent Application Publication No. 2014-073831

### Summary of Invention

### Technical Problem

As described above, in the environment of information overload for users, the information distribution medium which the users gaze at changes constantly, and it has been difficult to predict the information distribution medium which attracts interest of a plurality of users at a prescribed time.

An object of the present disclosure is to provide a platform, a system, a method, and a program for solving any of the aforementioned problems.

### Solution to Problem

A platform according to the present disclosure includes:
a gathering unit configured to gather user information items that are used to predict an information distribution medium which attracts interest of a user out of a plurality of the information distribution media; and
a prediction unit configured to predict the information distribution medium which attracts interest of a plurality of the users at a prescribed time, which is a predetermined point in time ahead of the current time by a predetermined time length, out of the plurality of the information distribution media based on the user information items of the plurality of the users and information about the plurality of the information distribution media from the past up to the current time.

A system according to the present disclosure includes an information provision apparatus, a plurality of information distribution media, and a platform, in which
the information provision apparatus includes a transmission unit configured to transmit, to the platform, user information items that are used to predict an information distribution medium which attracts interest of a user out of the plurality of the information distribution media, and
the platform includes:
   a gathering unit configured to gather the user information items; and
   a prediction unit configured to predict the information distribution medium which attracts interest of a plurality of the users at a prescribed time, which is a predetermined point in time ahead of the current time by a predetermined time length, out of the plurality of the information distribution media based on the user information items of the plurality of the users and information about the plurality of the information distribution media from the past up to the current time.

A method according to the present disclosure includes:
gathering user information items that are used to predict an information distribution medium which attracts interest of a user out of a plurality of the information distribution media; and
predicting the information distribution medium which attracts interest of a plurality of the users at a prescribed time, which is a predetermined point in time ahead of the current time by a predetermined time length, out of the plurality of the information distribution media based on the user information items of the plurality of the users and information about the plurality of the information distribution media from the past up to the current time.

A program according to the present disclosure causes a computer to execute the processes of:
gathering user information items that are used to predict an information distribution medium which attracts interest of a user out of a plurality of the information distribution media; and
predicting the information distribution medium which attracts interest of a plurality of the users at a prescribed time, which is a predetermined point in time ahead of the current time by a predetermined time length, out of the plurality of the information distribution media based on the user information items of the plurality of the users and information about the plurality of the information distribution media from the past up to the current time.

### Advantageous Effects of Invention

According to the present disclosure, it is possible to provide a platform, a system, a method, and a program each adapted to predict an information distribution medium which attracts interest of a plurality of users.

### Brief Description of Drawings

Fig. 1 is a block diagram illustrating a system according to a first example embodiment;
Fig. 2 is a block diagram illustrating a platform according to a second example embodiment;
Fig. 3 is a block diagram illustrating a system according to the second example embodiment;
Fig. 4 is a flowchart illustrating an operation of the system according to second example embodiment;
Fig. 5 is a schematic diagram illustrating information distribution devices in an urban area; and
Fig. 6 is diagram illustrating a relationship between prescribed times and the most-interest-attracting information distribution devices.

### Description of Example Embodiment

Hereinbelow, example embodiments of the present disclosure will be described with reference to the drawings. In the drawings, identical or corresponding structural elements are denoted by the identical reference symbols and redundant explanations thereof are omitted where appropriate for clarification purpose.

### [First Example Embodiment]

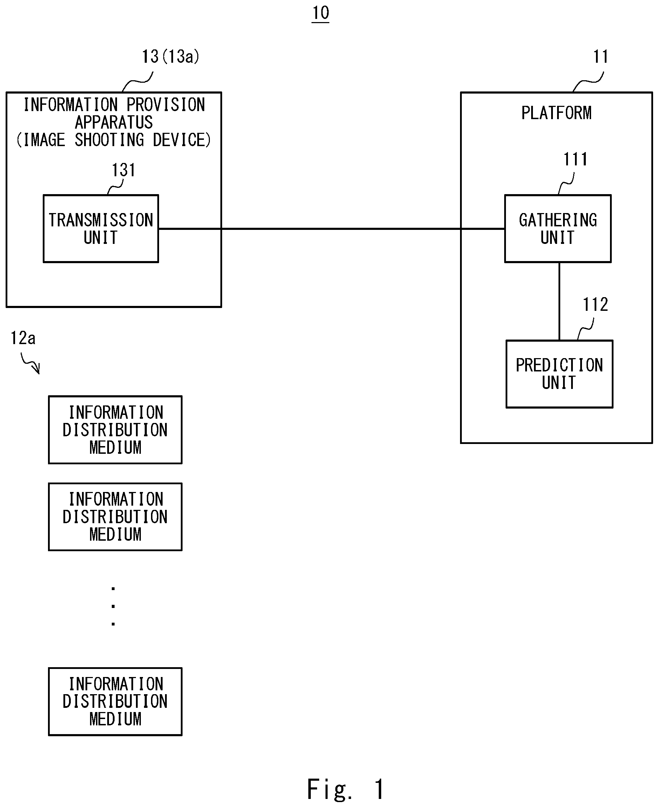

A configuration according to a first example embodiment of the present disclosure will be described. Fig. 1 is a block diagram illustrating a system according to the first example embodiment.

As shown in Fig. 1, a system 10 according to the first example embodiment includes an information provision apparatus 13, a plurality of information distribution media 12a, and a platform 11.

The information provision apparatus 13 includes a transmission unit 131 that transmits, to the platform 11, user information items that are used to predict a user's interest-attracting information distribution medium 12s out of the plurality of the information distribution media 12a.

Examples of the information provision apparatus 13 include a shooting device 13a that shoots a user, an apparatus that provides information of a carrier including location information of a mobile device, and an apparatus that provides information to be acquired by the OTT (Over The Top) service providers.

Further, examples of user information items that are used to predict the user's interest-attracting information distribution medium 12s include the user's line-of-sight information estimated by processing images shot by the shooting device 13a with an AI (Artificial Intelligence), location information of a mobile terminal acquired by a carrier (such as GPS, relative position to base station and the like), information about speed, orientation, and the like, and information acquired by the OTT service providers (including the user's usage history of the services provided by the OTT service providers and the result of estimating which of the information distribution media 12a the user is accessing to by analyzing the information the aforementioned user has posted through SNS and the like).

The information distribution media 12a are media used for distributing information and examples thereof include a display, a digital signage, projection mapping, an advertisement distribution vehicle, an advertisement distribution drone, a television, and a radio. Further, the information distribution media 12a may include those that do not function as media under normal circumstances (e.g. a wall on which projection mapping is performed and a space in the air where an advertisement distribution drone floats).

The platform 11 includes a gathering unit 111 and a prediction unit 112. The gathering unit 111 gathers user information items that are used to predict the user's interest-attracting information distribution medium 12s out of the plurality of the information distribution media 12a. The prediction unit 112 predicts the user's interest-attracting information distribution medium 12s which attracts interest of a plurality of users at a prescribed time, which is a predetermined point in time ahead of the current time by a predetermined time length, out of the plurality of the information distribution media 12a based on the user information items of a plurality of the users and information about the plurality of the information distribution media 12a from the past up to the current time. Note that examples of information about the information distribution media 12a include the type, the location information, the form of distribution, and the like of the information distribution medium 12a.

Next, an operation of the first example embodiment will be described.

The transmission unit 131 of the information provision apparatus 13 transmits, to the platform 11, user information items that are used to predict the user's interest-attracting information distribution medium 12s out of the plurality of the information distribution media 12a.

The gathering unit 111 of the platform 11 gathers the aforementioned user information items. Further, the prediction unit 112 predicts the user's interest-attracting information distribution medium 12s which attracts interest of a plurality of users at a prescribed time, which is a predetermined point in time ahead of the current time by a predetermined time length, out of the plurality of the information distribution media 12a based on the user information items of the plurality of the users and the information about the plurality of information distribution media 12a from the past up to the current time.

With this configuration, the system 10 according to the first example embodiment can predict the user's interest-attracting information distribution medium 12s which attracts interest of a plurality of users.

### [Second Example Embodiment]

Configurations of a platform and a system according to a second example embodiment of the present disclosure will be described.

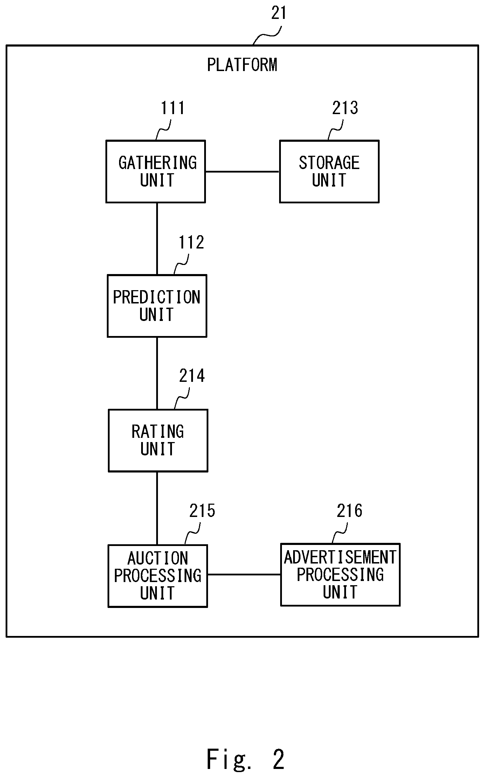

Fig. 2 is a block diagram illustrating a platform according to the second example embodiment.

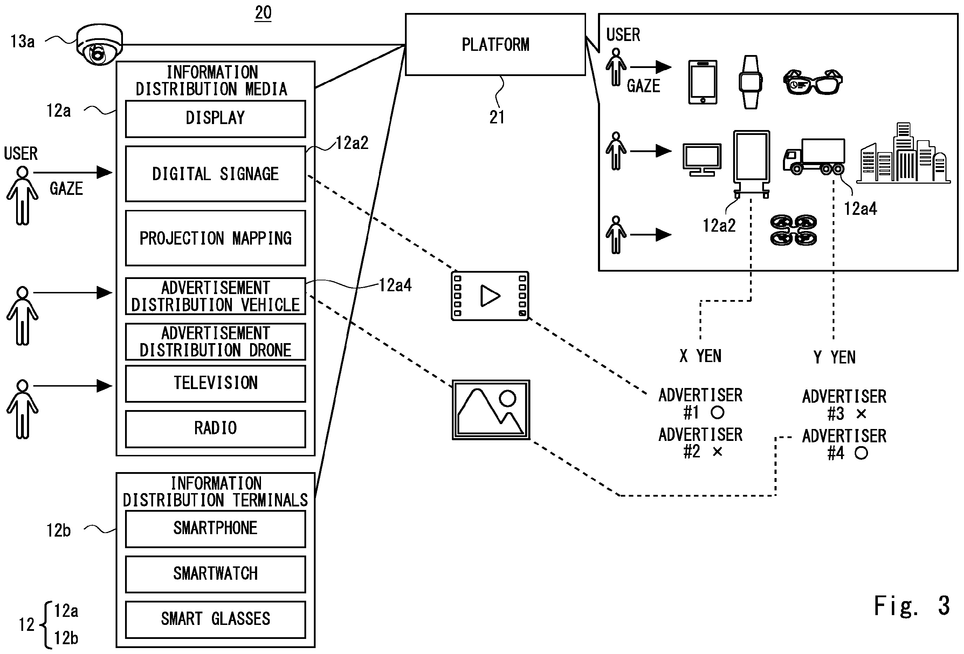

Fig. 3 is a block diagram illustrating a system according to the second example embodiment.

As shown in Figs. 2 and 3, a system 20 according to the second example embodiment includes the image shooting device 13a, an information distribution device 12, and a platform 21. The information distribution device 12 includes the information distribution media 12a and information distribution terminals 12b.

The shooting device 13a includes a shooting device transmission unit (not illustrated) that transmits, to the platform 21, video data obtained by shooting the user and the information distribution device 12. Examples of the shooting device 13a include a camera (a surveillance camera).

The information distribution device 12 includes a distribution device transmission unit (not illustrated) that transmits, to the platform 21, information of user's interest which is information in which the user may show interest and information about the information distribution device 12 that distributes the information of user's interest.

Note that the examples of the information distribution medium 12a include those that may not function as media under normal circumstances such as walls, spaces, and the like.

While the information distribution media 12a are media that provide information to the platform 21, they are also media that provide information to the users. Examples of the information distribution media 12a include at least one of a display, a digital signage, projection mapping, an advertisement distribution vehicle, an advertisement distribution drone, a television, and a radio.

While the information distribution terminals 12b are terminals that provide information to the platform 21, they are also media that provide information to the users. Examples of the information distribution terminals 12b include at least one of smartphones, smartwatches and smart glasses.

The users acquire information through media such as a display, a digital signage, projection mapping, an advertisement distribution vehicle, an advertisement distribution drone, a television, and a radio, or terminals such as a smartphone, a smartwatch, and smart glasses.

The platform 21 includes the gathering unit 111 and the prediction unit 112. The gathering unit 111 gathers the information of user's interest which is information the users may be attracted to and the information about the information distribution device 12 that distributes the information of user's interest in correlation with each other. The gathering unit 111 gathers the information of user's interest and the information about the information distribution device 12 from the information distribution device 12 and the shooting device 13a.

The gathering unit 111 may acquire, from the shooting device 13a, the video data obtained by shooting the user (and the information distribution device 12). Then, based on the acquired video data, the gathering unit 111 may gather the information of user's interest and the information about the information distribution device 12 in correlation with each other.

The prediction unit 112 predicts a most-interest-attracting information distribution device 12m that is the information distribution device 12 which attracts the interest of the largest number of users among a plurality of users at a prescribed time, which is a predetermined point in time ahead of the current time by a predetermined time length, based on the information of user's interest of the plurality of the users and the information about the information distribution device 12 from the past up to the current time.

That is, the prediction unit 112 predicts the most-interest-attracting information distribution device 12m which is the information distribution device (medium) that attract the most attention of the largest number of users among a plurality of users.

Note that the prediction unit 112 may predict the information of highest user's interest out of the plurality of information of user's interest at an prescribed time and a greatest-interest-information distribution device 12m1 that distributes the information of highest user's interest based on the information of user's interest of the plurality of the users and the information about the information distribution device 12 from the past up to the current time.

That is, the prediction unit 112 may predict the information of user's interest which attracts the most attention from the users at a prescribed time and may also predict the greatest-interest-information distribution device 12m1 which distributes the predicted information of user's greatest interest.

Further, when the information distribution device 12 is the information distribution medium 12a, the prediction unit 112 predicts, based on the information gathered by the gathering unit 111, a most-interest-attracting information distribution medium 12ma that will be a notable gazing target in the future out of the plurality of the information distribution media 12a.

Further, the prediction unit 112 may divide the plurality of the users into user groups based on the user types and predict the user's interest-attracting information distribution medium 12s and the most-interest-attracting information distribution device 12m for each user group. The user type is, for instance, the age, the gender, and the like of each user.

Further, the prediction unit 112 may assign a rating value to each of the plurality of the information distribution devices 12 at a prescribed time, which is a predetermined point in time ahead of the current time by a predetermined time length, based on the information of user's interest of the plurality of the users and the information about the information distribution device 12 from the past up to the current time. The rating value is, for instance, a price in relation to the degree of gazing by the users. The platform 21 may further include a rating unit 214 that determines the usage fee per unit time of each of the plurality of the information distribution devices 12 at a prescribed time based on the rating value thereof.

Further, the platform 21 may further include an auction processing unit 215 that selects an advertiser who uses the most-interest-attracting information distribution device 12m at a prescribed time based on the rating value. The auction processing unit 215 holds an auction with the usage fee based on the rating value (price) set as the initial set fee and, and then designates the advertiser who won the bid at the auction as the advertiser to use the most-interest-attracting information distribution medium 12ma that will be a notable gazing target in the future.

For example, as shown in Fig. 3, the platform 21 predicts the digital signage 12a2 as the most-interest-attracting information distribution device 12m and holds an auction with the initial set fee set as X Japanese Yen. The platform 21 designates the advertiser #1 who won the bid at the auction as the advertiser to perform advertising using the most-interest-attracting information distribution medium 12ma that will be a notable gazing target in the future. The advertiser #1 uses the digital signage 12a2 to distribute an advertisement.

Further, for example, the platform 21 predicts the advertisement distribution vehicle 12a4 as the most-interest-attracting information distribution device 12m and holds an auction with Y Japanese Yen set as the initial set fee. The platform 21 designates the advertiser #4 who won the bid at the auction as the advertiser to perform advertising using the most-interest-attracting information distribution medium 12ma that will be a notable gazing target in the future. The advertiser #4 uses the advertisement distribution vehicle 12a4 to distribute an advertisement.

Further, the platform 21 may further include an advertisement processing unit 216 that processes an advertisement of the advertiser who won the bid at the auction into a most effective form of advertising based on the feature of the information distribution medium 12a and the gazing time during which the information distribution medium 12a continues to be the notable gazing target.

Further, the prediction unit 112 may divide the plurality of the users into a user group of users who can watch videos and predict the digital signage 12a2 as the most-interest-attracting information distribution device 12m that will be a notable gazing target in the future by the user group. The advertisement processing unit 216 processes a video to fit the time frame during which the digital signage 12a2 continues to be the most-interest-attracting information distribution device 12m.

Note that the prediction unit 112 may select an information distribution device 12 which is capable of distributing a video over a certain period of time among the plurality of the information distribution devices 12 and predict the selected information distribution device 12 as the most interest-attracting information distribution device 12m.

Further, the prediction unit 112 may divide the plurality of the users into a user group of users who can view still images and predict the advertisement distribution vehicle 12a4 as the most-interest-attracting information distribution device 12m that will be a notable gazing target in the future by the user group. Then, a still image advertisement may be distributed via the advertisement distribution vehicle 12a4.

The platform 21 according to the first example embodiment predicts the most-interest-attracting information distribution device 12m which attracts interest of the largest number of users among the plurality of the users at a prescribed time, which is a predetermined point in time ahead of the current time by a predetermined time length, based on the information of user's interest of the plurality of the users and the information about the information distribution device 12 from the past up to the current time.

That is, according to the first example embodiment, it is possible to provide a platform and a system each adapted to predict the most-interest-attracting information distribution device 12m which attracts interest of the largest number of users.

Note that the platform 21 may further include a storage unit 213 that stores the information of user's interest of a plurality of users and the information about the information distribution device 12 that distributes the information of user's interest from the past up to the current time in correlation with each other.

Further, the platform 21 gathers information about the information of user's interest of the plurality of the users and the information about the plurality of the information distribution devices 12 for all of information distribution devices 12 including the information distribution media 12a and the information distribution terminals 12b and predicts the most-interest-attracting information distribution device 12m. By this configuration, it is possible to centrally control information about the distribution devices 12 which is efficient, and therefore the most-interest-attracting information distribution device 12m can be predicted.

An operation of a system according to the second example embodiment will be described. In the description of the operation of the system 20, the case in which the platform 21 gathers the information of user's interest and the like from the information distribution terminals 12b and the greatest-interest-attracting information distribution medium 12ma which will be the notable gazing target in the future will be described as an example and the system is not intended to be limited to this example.

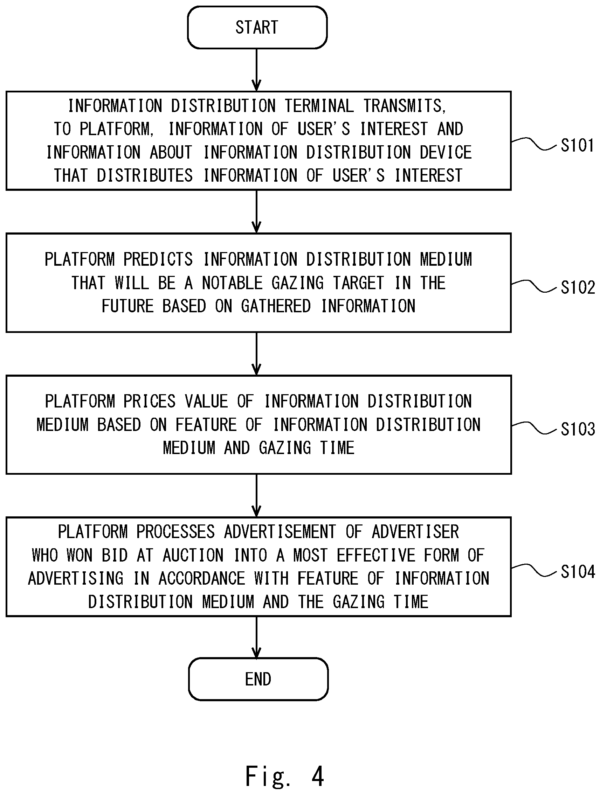

Fig. 4 is a flowchart illustrating an operation of the system according to second example embodiment.

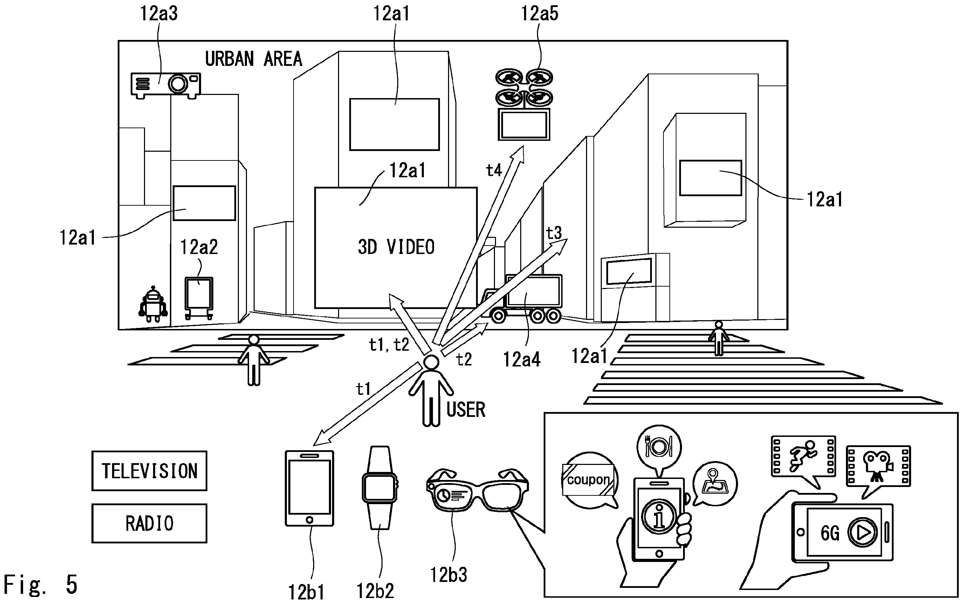

Fig. 5 is a schematic diagram illustrating information distribution devices in an urban area.

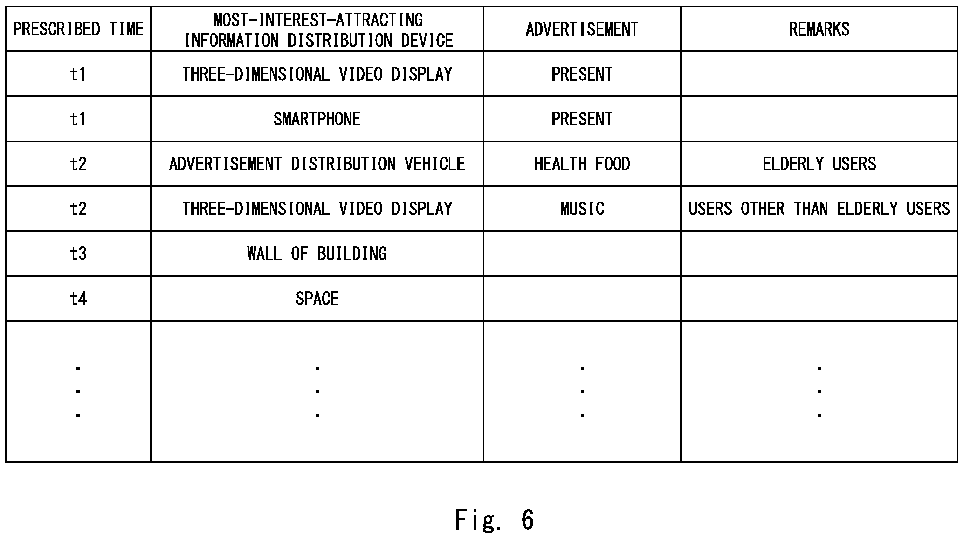

Fig. 6 is diagram illustrating a relationship between prescribed times and the most-interest-attracting information distribution devices.

As shown in Fig. 4, the information distribution terminal 12b transmits, to the platform 21, information of user's interest which is information in which the user may show interest and information about the information distribution device 12b that distributes the information of user's interest (Step S101).

The user information items may include the information of user's interest and the information about the information distribution device 12 (the information distribution medium 12a) used for distributing the information of user's interest. The information of user's interest may be information distributed via the information distribution devices 12 (the information distribution media 12a) that are present in the direction of the user's line of sight or information distributed via the information distribution devices 12 (the information distribution medium 12a) that are present in the direction in which the user's face is facing.

Further, the information of user's interest may be, for instance, the information about the user's line of sight, the information obtained from the location, the speed, and the orientation of the smartphone operated by the user. The information of user's interest may be information obtained from, for instance, the user's own user information, the user's browsing history, information about the text data posted by the user, and the like of the SNS (Social Networking Services). The information about the user's line of sight may be predicted using, for instance, AI (Artificial Intelligence).

The platform 21 predicts the information distribution medium 12a that will be a notable gazing target in the future out of the plurality of the information distribution media 12a based on the information gathered from the information distribution terminals 12b (the information of user's interest of the plurality of the users and the information about the information distribution devices 12b from the past up to the current time) (Step S102).

The platform 21 may divide the plurality of the users into user groups based on the features (the user types) such as the age, the gender and the like of the users who gaze at the information distribution medium 12a and predict the most-interest-attracting information distribution device 12m for each user group.

The platform 21 prices the value of the information distribution medium 12a based on the feature of the information distribution medium 12a and the gazing time during which the information distribution medium 12a continues to be the notable gazing target, and the like (Step S103). That is, the platform 21 assigns a rating value to each of the plurality of the information distribution media 12a that distribute the information of user's interest based on the feature of the information distribution medium 12a and the gazing time during which each of the plurality of the users gazes at the information of user's interest.

The platform 21 holds an auction for the information distribution medium 12a that will be a notable gazing target based on the rating value. The platform 21 processes the advertisement of the advertiser who won the bid at the auction into a most effective form of advertising in accordance with the feature of the information distribution medium 12a and the gazing time during which the information distribution medium 12a continues to be the notable gazing target (Step S104).

Here, the operation of the system according to the second example embodiment will be descried in more detail.

Fig. 5 is a schematic diagram illustrating information distribution devices in an urban area.

Fig. 6 is diagram illustrating the most-interest-attracting information distribution device that is a gazing target which is gazed at the most at each prescribed time.

As shown in Figs. 5 and 6, a prediction result was obtained in which at the prescribed time t1, the most-interest-attracting information distribution device 12m that will be a notable gazing target for a plurality of users is the display 12a1 that display the three-dimensional display, and the smartphone 12b1. In this case, the advertiser who won the bid for the prescribed time t1 at the auction uses at least one of the display 12a1 and the smartphone 12b1 to distribute an advertisement "giving out product H to the first ten customers at store S, which is D-meter ahead".

Note that the three-dimensional video normally displayed on the display 12a1 or the display of the smartphone 12b1 is temporarily suspended during which the advertisement of the advertiser who won the bid at the auction may be distributed.

Further, a prediction result was obtained in which at the prescribed time t2, the most-interest-attracting information distribution device 12m that will be a notable gazing target for elderly users is the advertisement distribution vehicle 12a4 and the most-interest-attracting information distribution device 12m that will be a notable gazing target for users other than the elderly users is the display 12a1 of the three-dimensional video. In this case, the advertiser who won the bid for the prescribed time t2 at the auction uses the advertisement distribution vehicle 12a4 to distribute, for example, an advertisement on health foods. Further, the advertiser who won the bid at the auction uses the display 12a1 to distribute, for instance, an advertisement on music charts to the users other than the elderly users.

Further, a prediction result was obtained in which at the prescribed time t3, the most-interest-attracting information distribution device 12m that will be a notable gazing target for a plurality of users is just a wall of a building with no display. In this case, the advertiser who won the bid for the prescribed time t3 at the auction uses a high-performance projection mapping 12a3 to distribute an advertisement on a wall of a building.

Further, a prediction result was obtained in which at the prescribed time t4, the most-interest-attracting information distribution device 12m that will be a notable gazing target for a plurality of users is an empty space. In this case, the advertiser who won the bid for the prescribed time t4 at the auction uses the advertisement distribution drone 12a5 to move to a suitable space and distribute an advertisement.

As described above, an auction is held among the advertisers and the advertiser who won the bid at the auction uses the most-interest-attracting information distribution device 12m that is predicted to be a notable gazing target to distribute an advertisement in the most effective form of advertising.

In the second example embodiment, the following information J1 to information J3 are mapped onto a digital twin of the city, the future notable gazing target of the users is predicted within the cyber space based on the information J1 to the information J3, a rating value is assigned to each of at least one or more of the information distribution media 12a, the advertiser holds an auction for the most-interest attracting distribution medium 12ma that will be a notable gazing target, and the advertiser who won the bid at the auction distributes an advertisement (referred to as contents or information of user's interest) distributes an advertisement in the most effective form of advertising for the predicted gazing target.

Information J1: Information about the user's line of sight, the user's expression on his/her face, the user's body temperature, the user's location, the user's posture, the user's moving speed, the user's age, and the user's physical characteristics acquired from images obtained from the surveillance cameras installed by the service providers, the local governments, and the like. This information includes information about the user's line of sight estimated by processing the images obtained from the surveillance cameras with an AI (Artificial Intelligence).

Information J2: Information about the location of the mobile terminal belonging to the user acquired from the mobile service provider, the posture of the mobile terminal, the moving speed of the mobile terminal, the orientation of the mobile terminal, and the like. Note that location of the mobile terminal may be acquired using, for instance, GPS (Global Positioning System) or a relative position of the mobile terminal.

Information J3: Information acquired from the OTT (Over The Top) service providers.

The aforementioned information includes not only the profile of the user (service user) who uses the services provided by the OTT service providers and the user's usage history but also includes a combination of information which the user has posted using the services and the like. The aforementioned information may include the result of analyzing which media (e.g. newspaper, terrestrial broadcasting, satellite broadcasting, CATV, internet video streaming service, radio, cable broadcasting, internet radio, etc.) the user has been using from the information posted on the SNS and the like by the user.

Note that in the aforementioned example embodiments, it has been described giving an example in which the information distribution media 12a (the information distribution devices 12) distribute, using videos, still images, and sounds, information that appeals to the user's audiovisual senses, but such description is not intended to limit the example embodiments in any way. In the example embodiments, information distribution media that distribute information other than videos, still images, and sounds, for example, information that appeals to other senses such as the sense of touch, the sense of taste, and the sense of smell may be used to distribute information to the users.

In the above example embodiments, the present disclosure has been described as a hardware configuration, but the present disclosure is not limited thereto. It is also possible to implement processing of each structural element by causing a CPU (Central Processing Unit) to execute a computer program.

In the aforementioned example embodiment the program can be stored and provided to a computer using any type of non-transitory computer readable media. Non-transitory computer readable media include any type of tangible storage media. Examples of non-transitory computer readable media include magnetic storage media (specifically, floppy disks, magnetic tapes, and hard disk drives), optical magnetic storage media (specifically, magneto-optical disks), CD-ROM (Read Only Memory), CD-R, CD-R/W, and semiconductor memories (specifically, mask ROM, PROM (Programmable ROM), EPROM (Erasable PROM), flash ROM, RAM (Random Access Memory)). Further, the program may be provided to a computer using any type of transitory computer readable media. Examples of transitory computer readable media include electric signals, optical signals, and electromagnetic waves. Transitory computer readable media can provide the program to a computer via a wired communication line such as electric wires and optical fibers, or a wireless communication line.

The present disclosure has been described with reference to the example embodiments. However, it should be noted that the present disclosure is not to be limited in any way by the example embodiments described above. The configuration and the details of the present disclosure can be modified in various ways that can be understood by one skilled in the art within the scope of present disclosure.

Note that the present disclosure is not limited to the aforementioned example embodiments and can be changed as appropriate without departing from the gist of the present disclosure.

The whole or part of the example embodiments disclosed above can be described as, but not limited to, the following supplementary notes.

### (Supplementary note 1)

A platform comprising:
a gathering unit configured to gather user information items that are used to predict an information distribution medium which attracts interest of a user out of a plurality of the information distribution media; and
a prediction unit configured to predict the information distribution medium which attracts interest of a plurality of the users at a prescribed time, which is a predetermined point in time ahead of the current time by a predetermined time length, out of the plurality of the information distribution media based on the user information items of the plurality of the users and information about the plurality of the information distribution media from the past up to the current time.

### (Supplementary note 2)

The platform described in Supplementary note 1, wherein the prediction unit is configured to predict a most-interest-attracting information distribution device which is an information distribution device that attracts the interest of the largest number of the users at the prescribed time based on information of the user's interest of the plurality of the users and information about the information distribution device that distributes the information of the user's interest from the past up to the current time.

### (Supplementary note 3)

The platform described in Supplementary note 1 or 2, wherein
the user information items include the information of the user's interest which is information that attract user's interest and information about the information distribution medium that is used to distribute the information of the user's interest, and
the information of the user's interest is information distributed via the information distribution medium present in the direction of the user's line of sight or information distributed via the information distribution medium present in the direction in which the user's face is facing.

### (Supplementary note 4)

The platform described in Supplementary note 3, wherein the gathering unit is configured to gather the information of the user's interest and the information about the information distribution medium via the information distribution media.

### (Supplementary note 5)

The platform described in Supplementary note 3, wherein the gathering unit is configured to
acquire, from a shooting device, video data obtained by shooting the user, and
gather, based on the acquired video data, the information of the user's interest and the information about the information distribution medium in correlation with each other.

### (Supplementary note 6)

The platform described in any one of Claims 3 to 5, further comprising a storing unit configured to store the information of the user's interest of the plurality of the users and the information about the information distribution device that distributes the information of the user's interest from the past up to the current time in correlation with each other.

### (Supplementary note 7)

The platform according to any one of Supplementary notes 1 to 6, wherein the predicting unit is configured to divide the plurality of the users into user groups based on types of the users and to predict the information distribution medium which attracts the interest of the users for each user group.

### (Supplementary note 8)

The platform according to any one of Supplementary notes 1 to 7, wherein
the predicting unit assigns a rating value to each of the plurality of the information distribution media at the prescribed time based on the user information items of the plurality of the users from the past to the current time,
the platform further comprising a rating unit configured to determine, based on the rating value, a usage fee of each of the plurality of the information distribution devices at the prescribed time.

### (Supplementary note 9)

The platform according to Supplementary note 8, further comprising an auction processing unit configured to select, based on the rating value, the information distribution medium to be used by an advertiser at the prescribed time.

### (Supplementary note 10)

The platform according to Supplementary note 8 or 9, wherein the predicting unit is configured to assign the rating value to each information distribution medium based on a gazing time during which each of the plurality of the users gazes at the information distribution medium.

### (Supplementary note 11)

A system comprising an information provision apparatus, a plurality of information distribution media, and a platform, wherein
the information provision apparatus comprises a transmission unit configured to transmit, to the platform, user information items that are used to predict an information distribution medium which attracts interest of a user out of the plurality of the information distribution media, and
the platform comprises:
   a gathering unit configured to gather the user information items; and
   a prediction unit configured to predict the information distribution medium which attracts interest of a plurality of the users at a prescribed time, which is a predetermined point in time ahead of the current time by a predetermined time length, out of the plurality of the information distribution media based on the user information items of the plurality of the users and information about the plurality of the information distribution media from the past up to the current time.

### (Supplementary note 12)

The system according to Supplementary note 11 further comprising an information distribution device including the information distribution medium and an information distribution terminal, wherein
the information distribution medium includes at least one of a display, a digital signage, projection mapping, an advertisement distribution vehicle, an advertisement distribution drone, a television, and a radio, and
the information distribution terminal includes at least one of a smartphone, a smart watch, and smart glasses.

### (Supplementary note 13)

A method comprising:
gathering user information items that are used to predict an information distribution medium which attracts interest of a user out of a plurality of the information distribution media; and
predicting the information distribution medium which attracts interest of a plurality of the users at a prescribed time, which is a predetermined point in time ahead of the current time by a predetermined time length, out of the plurality of the information distribution media based on the user information items of the plurality of the users and information about the plurality of the information distribution media from the past up to the current time.

### (Supplementary note 14)

A program for causing a computer to execute the processes of:
gathering user information items that are used to predict an information distribution medium which attracts interest of a user out of a plurality of the information distribution media; and
predicting the information distribution medium which attracts interest of a plurality of the users at a prescribed time, which is a predetermined point in time ahead of the current time by a predetermined time length, out of the plurality of the information distribution media based on the user information items of a plurality of the users and information about the plurality of the information distribution media from the past up to the current time.

The present disclosure has been described with reference to the example embodiments. However, it should be noted that the present disclosure is to be limited in any way by the example embodiments described above. The configuration and details of the present disclosure can be modified in various ways within the scope of the disclosure which can be understood by a skilled person in the art.

This application is based upon and claims the benefit of priority from Japanese patent application No. 2020-062796, filed on March 31, 2020, the entire contents of which are incorporated herein by reference.

### Reference Signs List

- 10:: SYSTEM
- 11:: PLATFORM
- 111:: GATHERING UNIT
- 112:: PREDICTION UNIT
- 213:: STORAGE UNIT
- 214:: RATING UNIT
- 215:: AUCTION PROCESSING UNIT
- 216:: ADVERTISEMENT PROCESSING UNIT
- 12:: INFORMATION DISTRIBUTION DEVICE
- 12s:: USER'S INTEREST-ATTRACTING INFORMATION DISTRIBUTION MEDIUM
- 12m:: MOST-INTEREST-ATTRACTING INFORMATION DISTRIBUTION DEVICE
- 12m1:: GREATEST-INTEREST-INFORMATION DISTRIBUTION DEVICE
- 12ma:: MOST-INTEREST-ATTRACTING INFORMATION DISTRIBUTION MEDIUM
- 12a:: INFORMATION DISTRIBUTION MEDIUM
- 12a1:: DISPLAY
- 12a2:: DIGITAL SIGNAGE
- 12a3:: PROJECTION MAPPING
- 12a4:: ADVERTISEMENT DISTRIBUTION VEHICLE
- 12a5:: ADVERTISEMENT DISTRIBUTION DRONE
- 12b:: INFORMATION DISTRIBUTION TERMINAL
- 12b1:: SMARTPHONE
- 12b2:: SMART WATCH
- 12b3:: SMART GLASSES
- 13:: INFORMATION PROVISION APPARATUS
- 13a:: SHOOTING DEVICE
- t1, t2, t3:: PRESCRIBED TIME
- J1, J2, J3:: INFORMATION

## Claims

1. A platform comprising:
gathering means for gathering user information items that are used to predict an information distribution medium which attracts interest of a user out of a plurality of the information distribution media; and
prediction means for predicting the information distribution medium which attracts interest of a plurality of the users at a prescribed time, which is a predetermined point in time ahead of the current time by a predetermined time length, out of the plurality of the information distribution media based on the user information items of the plurality of the users and information about the plurality of the information distribution media from the past up to the current time.

2. The platform according to Claim 1, wherein the prediction means predicts a most-interest-attracting information distribution device which is an information distribution device that attracts the interest of the largest number of the users at the prescribed time based on information of the user's interest of the plurality of the users and information about the information distribution device that distributes the information of the user's interest from the past up to the current time.

3. The platform according to Claim 1 or 2, wherein
the user information items include the information of the user's interest which is information that attract user's interest and information about the information distribution medium that is used to distribute the information of the user's interest, and
the information of the user's interest is information distributed via the information distribution medium present in the direction of the user's line of sight or information distributed via the information distribution medium present in the direction in which the user's face is facing.

4. The platform according to Claim 3, wherein the gathering means gathers the information of the user's interest and the information about the information distribution medium via the information distribution media.

5. The platform according to Claim 3, wherein the gathering means
acquires, from a shooting device, video data obtained by shooting the user, and
gathers, based on the acquired video data, the information of the user's interest and the information about the information distribution medium in correlation with each other.

6. The platform according to any one of Claims 3 to 5, further comprising storing means for storing the information of the user's interest of the plurality of the users and the information about the information distribution device that distributes the information of the user's interest from the past up to the current time in correlation with each other.

7. The platform according to any one of Claims 1 to 6, wherein the predicting means divides the plurality of the users into user groups based on types of the users and predicts the information distribution medium which attracts the interest of the users for each user group.

8. The platform according to any one of Claims 1 to 7, wherein the predicting means assigns a rating value to each of the plurality of the information distribution media at the prescribed time based on the user information items of the plurality of the users from the past to the current time,
the platform further comprising rating means for determining, based on the rating value, a usage fee of each of the plurality of the information distribution devices at the prescribed time.

9. The platform according to Claim 8, further comprising auction processing means for selecting, based on the rating value, the information distribution medium to be used by an advertiser at the prescribed time.

10. The platform according to Claim 8 or 9, wherein the predicting means assigns the rating value to each information distribution medium based on a gazing time during which each of the plurality of the users gazes at the information distribution medium.

11. A system comprising an information provision apparatus, a plurality of information distribution media, and a platform, wherein
the information provision apparatus comprises transmission means for transmitting, to the platform, user information items that are used to predict an information distribution medium which attracts interest of a user out of the plurality of the information distribution media, and
the platform comprises:
gathering means for gathering the user information items; and
prediction means for predicting the information distribution medium which attracts interest of a plurality of the users at a prescribed time, which is a predetermined point in time ahead of the current time by a predetermined time length, out of the plurality of the information distribution media based on the user information items of the plurality of the users and information about the plurality of the information distribution media from the past up to the current time.

12. The system according to Claim 11 further comprising an information distribution device including the information distribution medium and an information distribution terminal, wherein
the information distribution medium includes at least one of a display, a digital signage, projection mapping, an advertisement distribution vehicle, an advertisement distribution drone, a television, and a radio, and
the information distribution terminal includes at least one of a smartphone, a smart watch, and smart glasses.

13. A method comprising:
gathering user information items that are used to predict an information distribution medium which attracts interest of a user out of a plurality of the information distribution media; and
predicting the information distribution medium which attracts interest of a plurality of the users at a prescribed time, which is a predetermined point in time ahead of the current time by a predetermined time length, out of the plurality of the information distribution media based on the user information items of the plurality of the users and information about the plurality of the information distribution media from the past up to the current time.

14. A non-transitory computer-readable medium storing a program for causing a computer to execute the processes of:
gathering user information items that are used to predict an information distribution medium which attracts interest of a user out of a plurality of the information distribution media; and
predicting the information distribution medium which attracts interest of a plurality of the users at a prescribed time, which is a predetermined point in time ahead of the current time by a predetermined time length, out of the plurality of the information distribution media based on the user information items of a plurality of the users and information about the plurality of the information distribution media from the past up to the current time.
